# EUROPÄISCHE PATENTSCHRIFT

(11) **EP 1 257 741 B1**
(45) Veröffentlichungstag und Bekanntmachung des Hinweises auf die Patenterteilung: **08.09.2004**
(21) Anmeldenummer: 01915250.3
(22) Anmeldetag: 14.02.2001
(51) Int. Cl.: F02N 11/00, F02B 75/22, F02B 61/02

(54) **STARTVORRICHTUNG FÜR EINEN ZWEIZYLINDERVERBRENNUNGSMOTOR IN V-ANORDNUNG**
STARTING DEVICE FOR A TWIN CYLINDER INTERNAL COMBUSTION ENGINE IN A V-FORMAT
DISPOSITIF DE DEMARRAGE POUR UN MOTEUR A COMBUSTION INTERNE A DEUX CYLINDRES EN V

(30) Priorität: 15.02.2000 DE 10006690
(43) Veröffentlichungstag der Anmeldung: 20.11.2002
(73) Patentinhaber: KTM Sportmotorcycle AG, 5230 Mattighofen (AT)
(72) Erfinder: HOLWEG, Claus, 5162 Obertrum (AT)
(74) Vertreter: Söllner, Udo, Dipl.-Ing.
(86) Internationale Anmeldenummer: PCT/EP2001/001636
(87) Internationale Veröffentlichungsnummer: WO 2001/061183

(56) Entgegenhaltungen:
- EP-A- 0 390 587
- US-A- 2 335 186
- US-A- 2 925 742
- US-A- 4 957 071

## Beschreibung

Die vorliegende Erfindung betrifft eine Startvorrichtung für einen Zweizylinderverbrennungsmotor mit Zylindern in V-Anordnung mit einem elektrischen Startermotor und einem damit gekoppelten Zahnradgetriebe nach dem Oberbegriff des Anspruchs 1.

Bei dem hier angesprochenen Zweizylinderverbrennungsmotor handelt es sich um einen Motor in V-Anordnung mit zwei Zylindern, der zur Verwendung in Motorrädern vorgesehen ist. Bei einem solchen Motor ist die Einsparung von Gewicht von großer Bedeutung, da ein niedrigeres Gewicht des Motors die Manövrierbarkeit des damit ausgestatteten Motorrads erhöht. Wenn ein solches Motorrad beispielsweise zu Geländesportfahrten eingesetzt wird, dann besteht auch die Gefahr von Beschädigungen, wenn der Motor mit Komponenten bestückt ist, die sich im Einflussbereich von beispielsweise vom Vorderrad des Motorrads aufgewirbelten Steinen befinden.

Wenn bei einem solchen V2-Motor eine elektrische Starteinrichtung mit einem elektrischen Startermotor zum Einsatz kommt, so wurde der elektrische Startermotor bisher in Fahrtrichtung betrachtet entweder vor oder hinter dem Motor angeordnet, also entweder in einem steinschlaggefährdeten Bereich oder in einem stark von der Hitzeentwicklung des Motor beeinflussten Bereich. Auch führt eine solche Anordnung zu einer wenig kompakten Bauweise, da ein vor dem Motor angeordneter Startermotor den im Rahmen des Motorrads zur Anordnung des V2-Motors erforderlichen Platz ansteigen lässt und ein in Fahrtrichtung betrachtet hinterhalb des hinteren Zylinders angeordneter Startermotor eine vergleichsweise lange Momentenübertragungsstrecke vom Startermotor zur Kurbelwelle des V2-Motors benötigt.

Aus der US 2,335,186 A ist ein Verbrennungsmotor in V-Anordnung für ein Flugzeug bekannt geworden, bei der ein elektrischer Startermotor im V-förmigen Zwischenraum zwischen den Zylindern und oberhalb der Kurbelwelle angeordnet ist. Dieser Startermotor ist über ein Zahnradgetriebe mit der Kurbelwelle zur Antriebsmomentenübertragung gekoppelt.

Der vorliegenden Erfindung liegt daher nunmehr zur Beseitigung der vorstehend geschilderten Nachteile die Aufgabe zugrunde, eine Startvorrichtung für einen Zweirylinderverbrennungsmotor mit Zylindern in V-Anordnung zu schaffen, bei der der Startermotor außerhalb eines steinschlaggefährdeten Bereichs angeordnet ist und der zur Anordnung des V2-Motors im Motorradrahmen erforderliche Platz verringert werden kann.

Die zur Lösung dieser Aufgabe geschaffene Erfindung weist die im Anspruch 1 angegebenen Merkmale auf. Vorteilhafte Ausgestaltungen hiervon sind in den weiteren Ansprüchen beschrieben.

Nach der Erfindung ist nunmehr eine Startvorrichtung für einen Zweizylinderverbrennungsmotor mit Zylindern in V-Anordnung vorgesehen mit einem elektrischen Startermotor und einem damit gekoppelten Zahnradgetriebe zur Übertragung eines Abtriebsmoments des Startermotors auf eine Kurbelwelle des Motors und einer zwischen dem Getriebe und der Kurbelwelle angeordneten Freilaufkupplung, wobei der Startermotor und das Getriebe im V-förmigen Zwischenraum zwischen den Zylindern oberhalb der Kurbelwelle angeordnet sind. Durch diese Anordnung wird erreicht, dass sich der Startermotor außerhalb des durch Steinschlag gefährdeten Bereichs befindet und der zur Aufnahme des V2-Motors im Rahmen des Motorrads erforderliche Bauraum verglichen mit bekannten Anordnungen deutlich verringert wird.

Nach der Erfindung ist es vorgesehen, dass das Getriebe eine oberhalb der Kurbelwelle angeordnete Zwischenwelle zur Übertragung des Abtriebsmoments des Startermotors auf die Kurbelwelle besitzt und die Zwischenwelle darüber hinaus auch zum Massenausgleich erster Ordnung und Momentenausgleich erster Ordnung ausgebildet ist. Hierzu kann an der Zwischenwelle ein Zahnrad drehbar gelagert sein, mit dem das Abtriebsmoment auf die Kurbelwelle übertragen wird.

Durch diese Ausbildung der Zwischenwelle wird eine Funktionskonzentration erreicht, so dass verglichen mit bekannten V2-Motoren aufgrund der erfindungsgemäßen Startvorrichtung auch eine Gewichtsverringerung des damit ausgestatteten V2-Motors erreicht werden kann, da die Momentenübertragung vom Startermotor zur Kurbelwelle des Motors über ein an der Zwischenwelle gelagertes Zahnrad stattfindet und die Zwischenwelle gleichzeitig als Ausgleichswelle des Motors dient und daher keine separate Ausgleichswelle mit entsprechenden Lagerstellen notwendig ist, wie dies bei bekannten V2-Motoren der Fall ist, da nach der Erfindung die Funktion des Massenausgleichs und Momentenausgleichs erster Ordnung in die Zwischenwelle der Startvorrichtung integriert wurde.

Zu diesem Zweck ist es vorgesehen, dass an der Zwischenwelle zum Massenausgleich und Momentenausgleich erster Ordnung ein wangenförmiger Massekörper axialfest und drehfest an jeweils einem axialen Endbereich der Zwischenwelle festgelegt ist, so dass sich die wangenförmigen Massekörper außerhalb der oder auch zwischen den Kurbelwellenwangen des V2-Motors befinden.

Eine weitere Bauraumeinsparung und damit größere Kompaktheit des mit der erfindungsgemäßen Startvorrichtung ausgestatteten V2-Motors lässt sich dadurch erreichen, dass die Zwischenwelle mindestens ein Ritzel zum Antrieb einer Steuerkette zur Betätigung von Gaswechselsteueirbauteilen des Verbrennungsmotors aufweist Es bedeutet dies mit anderen Worten, dass an der Zwischenwelle zwei Steuerkettenritzel vorgesehen sein können, die jeweils eine Steuerkette für den Nockenwellenantrieb des vorderen und hinteren Zylinderkopfs des mit der erfindungsgemäßen Startvorrichtung ausgestatteten Verbrennungsmotors antreiben.

Wenn ein flüssigkeitsgekühlter V2-Motor mit der erfindungsgemäßen Startvorrichtung ausgestattet werden soll, dann ist es möglich, dass an der Zwischenwelle an einem axialen Ende ein Pumpenrad zum Fördern einer Kühfflüssigkeit des Verbrennungsmotors axialfest und drehfest festgelegt wird. Durch die Integration der Funktion des Umpumpens der Kühlflüssigkeit eines solchen flüssigkeitsgekühlten Verbrennungsmotors in die Zwischenwelle der Startvorrichtung wird erreicht, dass verglichen mit bekannten Motorenkonzepten zwei weitere Lagerstellen nämlich für die Lagerung der Kühlflüssigkeitspumpenwelle eingespart werden können. Dies führt zusammen mit der Integration der Ausgleichsfunktion für die freien Massen- und Momentenkräfte erster Ordnung in die Zwischenwelle neben der Gewichtsersparnis auch zu einer Verbrauchsverringerung, da verglichen mit bekannten Motorenkonzepten auf diese Weise mehrere Reibung verursachende Lagerstellen eingespart werden können.

Nach einer Weiterbildung der erfindungsgemäßen Startvorrichtung ist es vorgesehen, dass die Zwischenwelle zur Entlüftung des Kurbelgehäuses des Verbrennungsmotors eine sich über weitgehend die gesamte axiale Länge erstreckende Längsbohrung aufweist, quer zu der an einem axialen Ende der Zwischenwelle eine durchgehende Querbohrung zur Zentrifugalabscheidung von Schmieröl des Verbrennungsmotors verläuft.

Ein durch Blow-by Gase aus den Verbrennungsräumen des V2-Motors und aufgrund der oszillierenden Bewegung der Kolben in den Zylinderlaufbahnen im Kurbelgehäuse sich ansonsten aufbauender Überdruck kann daher über die axiale Längsbohrung der Zwischenwelle beispielsweise in einem Luftfilterkasten entspannt werden, der mit einer Gemischbildungseinrichtung des V2-Motors in Verbindung steht, wobei durch die beispielsweise mit Kurbelwellendrehzahl umlaufende Zwischenwelle und der an ihr ausgebildeten Querbohrung eine Zentrifugalabscheidung von Schmieröl des Verbrennungsmotors stattfindet, so dass dieses nicht in den Luftfilterkasten gelangt.

Es ist auch möglich, die Abscheidung von Motoröl über mindestens einen in einem wangenförmigen Massekörper an der Zwischenwelle vorgesehenen Kanal durchzuführen. Dieser Kanal läuft daher von der Längsbohrung der Zwischenwelle durch den Massekörper hindurch, wodurch sich ein große Länge des Kanals einstellt mit einer hohen am Ende des Kanals aufgrund der Rotation der Zwischenwelle wirkenden Geschwindigkeit, was zu einer guten Abscheidung des Motoröls führt und somit zu einer geringen Beladung des Luftfilters des Motors mit Motoröl.

Der Startermotor kann dabei sein Abtriebsmoment auf das an der Zwischenwelle gelagerte Zahnrad direkt oder über dazwischen angeordnete Getriebewellen übertragen, wobei durch eine entsprechende Auswahl des Übersetzungsverhältnisses zwischen dem Startermotor und der Kurbelwelle ein vergleichsweise leistungsschwacher und damit klein und kompakt bauender elektrischer Startermotor zum Starten des V2-Motors ausreicht.

Die zwischen dem Getriebe und der Kurbelwelle vorgesehene Freilaufkupplung sorgt dafür, dass die kraftschlüssige Verbindung zwischen dem Startermotor und der Kurbelwelle nach dem Erreichen einer vorbestimmten Drehzahldifferenz geöffnet wird, das heißt also nach dem Starten des V2-Motors, dessen Drehzahl nach dem Starten höher ist als die vom Startermotor herbeigeführte Kurbelwellendrehzahl vor dem Starten des Motors.

Die Erfindung wird im folgenden anhand der Zeichnung näher erläutert. Diese zeigt in
- Fig. 1: eine schematische Darstellung eines V2-Motors von der Seite betrachtet mit einer im V-Zwischenraum zwischen den beiden Zylindern angeordneten Startvorrichtung;
- Fig. 2: eine teilweise geschnittene Darstellung durch die Startvorrichtung nach Fig. 1;
- Fig. 3: eine teilweise geschnittene Darstellung der Zwischenwelle der Startvorrichtung nach einer Ausführungsform;
- Fig. 4: eine Darstellung einer Zwischenwelle nach einer weiteren Ausführungsform; und
- Fig. 5: eine Schnittdarstellung gemäß der Richtung der Linie 5 - 5 nach Fig. 4.

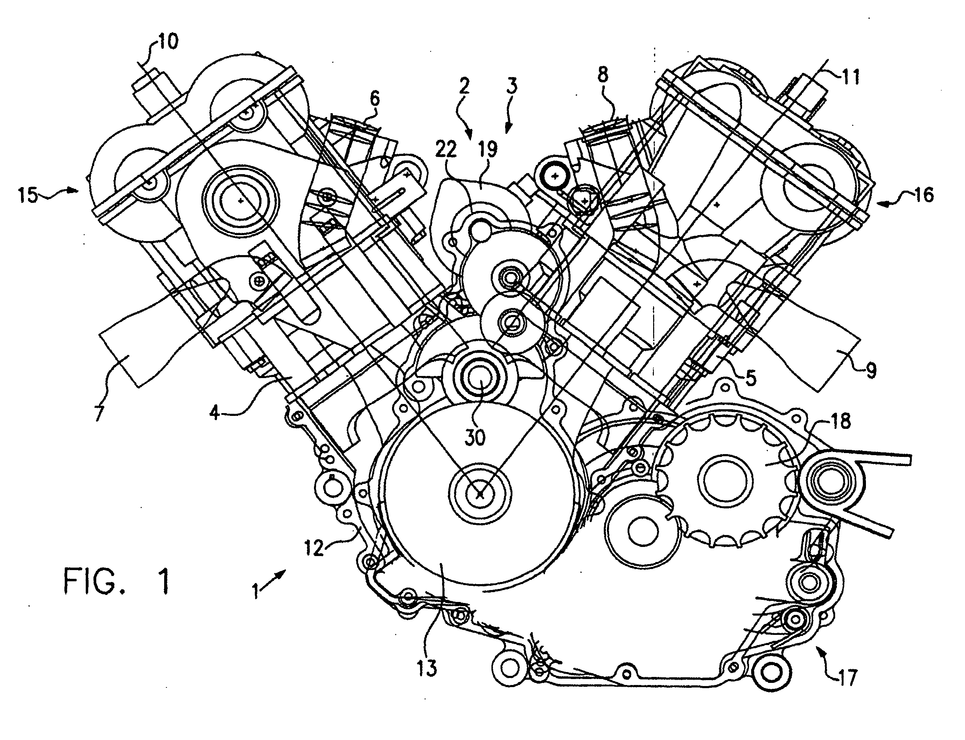

Fig. 1 der Zeichnung zeigt in einer Seitenansicht eine schematische Darstellung eines V2-Motors 1 mit einer Startvorrichtung 2, die im V-förmigen Zwischenraum 3 zwischen dem vorderen Zylinder 4 und dem hinteren Zylinder 5 angeordnet ist.

Wie es ohne weiteres ersichtlich ist, weist der vordere Zylinder 4 einen Einlaß 6 und einen Auslaß 7 auf, der hintere Zylinder 5 besitzt einen Einlaß 8 und einen Auslaß 9. In der dargestellten Ausführungsform weist der V2-Motor 1 einen Zylinderwinkel von etwa 75° auf, der zwischen der Zylinderhochachse 10 des vorderen Zylinders 4 und der Zylinderhochachse 11 des hinteren Zylinders 5 aufgespannt ist.

In einem Kurbelgehäuse 12 des Motors 1 befindet sich hinter beziehungsweise auf der Höhe des Deckels 13 eine Kurbelwelle 14 des V2-Motors 1. Im Zylinderkopf 15 des vorderen Zylinders 4 und im Zylinderkopf 16 des hinteren Zylinders 5 befinden sich Gaswechselsteuerbauteile in der Form von Einlaß- und Auslassventilen sowie dem Ventiltrieb.

In der Zeichnungsebene rechts vom Deckel 13 und unterhalb des hinteren Zylinders 5 befindet sich ein mehrgängiges Schaltgetriebe 17 mit einem an einer Getriebeabtriebswelle angeordneten Kettenritzel 18, mit dem das Abtriebsmoment des Motors 1 über eine nicht dargestellte Antriebskette an das Hinterrad des Motorrads übertragen werden kann.

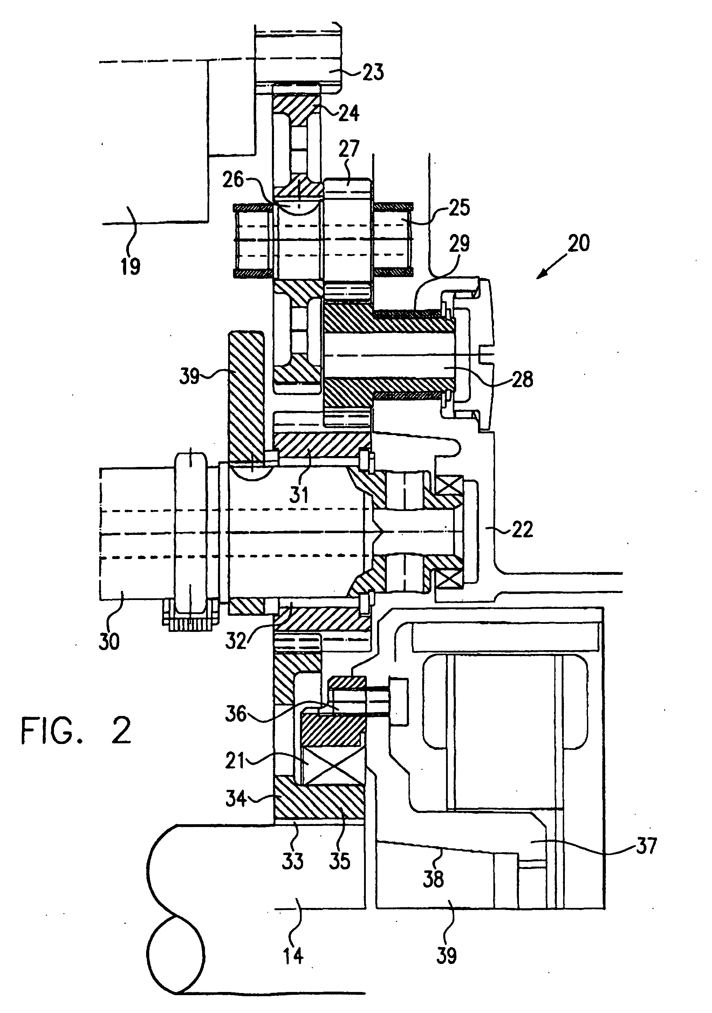

Die Startvorrichtung 2 weist einen elektrischen Startermotor 19 und ein damit gekoppeltes Zahnradgetriebe 20 (siehe Fig. 2) mit mehreren Getriebewellen und Zahnrädern zur Übertragung eines Abtriebsmoments des Startermotors 19 auf die Kurbelwelle 14 des Motors 1 auf, wobei sich zwischen der Kurbelwelle 14 und dem Getriebe 20 eine Freilaufkupplung 21 angeordnet befindet.

Unter Bezugnahme auf Fig. 2 der Zeichnung werden nachfolgend die Einzelheiten der Startvorrichtung 2 beschrieben.

Der elektrische Startermotor 19 befindet sich an einem Gehäuseansatz 22 (siehe Fig. 1) des Motors 1 festgelegt, wobei sich eine mit einer geraden Stirnverzahnung versehene Abtriebswelle 23 aus einem Gehäuse des elektrischen Startermotors 19 heraus erstreckt, so dass es sich mit einer geraden Stirnverzahnung eines Zahnrads 24 an einer Getriebewelle 25 in einem kämmenden Eingriff befindet. Das Zahnrad 24 ist dabei über eine Scheibenfeder 26 an der Getriebewelle 25 drehfest festgelegt, so dass das vom elektrischen Startermotor 19 stammende Abtriebsmoment über die Abtriebswelle 23 und das Zahnrad 24 in die Getriebewelle 25 eingeleitet wird, auf der axial zum Zahnrad 24 versetzt ein zweites Zahnrad 27 drehfest an der Getriebewelle 25 angeordnet ist. Es ist auch möglich, das Zahnrad 24 mittels einer Presspassung statt der Scheibenfeder 26 an der Welle 25 festzulegen. Die Welle 25 kann dabei mittels einer Wälzlagerung im Gehäuse 22 drehbar festgelegt sein.

Das Zahnrad 27 befindet sich mit einer, mit einer geraden Stirnverzahnung versehenen Getriebewelle 28 in Eingriff, die über eine Lagerstelle 29 im Gehäuse 22 drehbar angeordnet ist. Bei dieser Ausführungsform ist die Welle 28 einstückig mit einer Verzahnung ausgebildet, es ist aber auch möglich, statt der Welle 28 einen Achszapfen im Gehäuse 22 mittels einer lösbaren Schraubenverbindung festzulegen, an dem über ein Nadellager drehbar ein Zahnkranz axial festgelegt werden kann und sich mit dem Zahnrad 27 in Eingriff befindet.

Über die Getriebewelle 28 oder den vorstehend erwähnten Zahnkranz wird das Abtriebsmoment des elektrischen Startermotors 19 in ein auf einer Zwischenwelle 30 an einem Nadellager 32 drehbar gelagertes Zahnrad 31 eingeleitet.

Das Zahnrad 31 befindet sich mit einem auf der Kurbelwelle 14 über ein Gleitlager 33 oder Nadellager drehbar angeordnetes Zahnrad 34 in einem kämmenden Eingriff, so dass das vom Startermotor 19 stammende Abtriebsmoment letztlich das Zahnrad 34 in Drehung versetzt. Am Außenumfang der Nabe 35 des Zahnrads 34 befindet sich die Freilaufkupplung 21 angeordnet, so dass bei kraftschlüssiger Freilaufkupplung 21 das Abtriebsmoment des elektrischen Startermotors 19 über das Zahnrad 34 und den Außenkäfig der Freilaufkupplung 21 und die Schraubverbindung 36 in einen Drehkranz 37 eingeleitet wird, der über einen Kegelsitz 38 und eine nicht dargestellte Passfeder zwischen dem Kegelstumpfende 39 der Kurbelwelle 14 und dem Drehkranz 37 formschlüssig mit der Kurbelwelle 14 verbunden ist.

Wenn daher ein Fahrer des mit dem V2-Motor 1 ausgestatteten Motorrads den Motor 1 starten will, so kann er hierzu beispielsweise einen Starterknopf am Lenkerende des Motorrads betätigen, so dass der elektrische Startermotor 19 bestromt wird und ein Abtriebsmoment über die Abtriebswelle 23 auf das Zahnrad 24 abgibt. Über das weitere Zahnrad 27, die geradverzahnte Getriebewelle 28, das Zahnrad 31 und das Zahnrad 34 sowie die Freilaufkupplung 21 wird das Abtriebsmoment auf den Drehkranz 37 und von diesem auf die Kurbelwelle 14 übertragen. Sobald auf diese Weise der Motor 1 eine zum Starten ausreichende Kurbelwellendrehzahl erreicht hat und selbsttätig zu laufen begonnen hat, steigt die Drehzahl der Kurbelwelle 14 deutlich über die Startdrehzahl an, so dass die Freilaufkupplung 21 öffnet und das Zahnradgetriebe 20 von der Kurbelwelle 14 trennt.

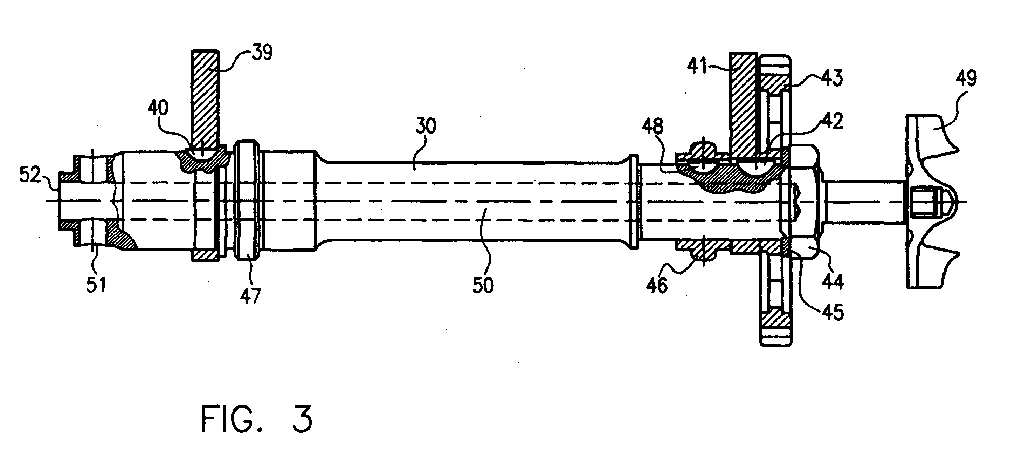

Figur 2 der Zeichnung zeigt noch einen Ausschnitt der Zwischenwelle 30 mit einem daran angeordneten ersten Ausgleichsgewicht 39. Die Zwischenwelle 30 ist in Figur 3 der Zeichnung anhand einer teilweise geschnittenen Darstellung noch näher dargestellt.

Das erste Ausgleichsgewicht 39 für den Ausgleich der freien Massenkräfte und Momente erster Ordnung ist über eine Scheibenfeder 40 an der Welle 30 drehfest festgelegt. Das über das Lager 32 auf der Zwischenwelle 30 drehbar gelagerte Zahnrad 31 ist in Fig. 3 zur Vereinfachung der Darstellung weggelassen worden. Im Bereich des der Anordnung des ersten Ausgleichsgewichts 39 axial gegenüber. liegenden Endes der Zwischenwelle 30 ist ein zweites Ausgleichsgewicht 41 angeordnet und zwar ebenfalls wieder über eine Scheibenfeder 42 drehfest angeordnet. Die Scheibenfeder 42 sorgt auch für eine Drehmomentübertragung zwischen einem Zahnrad 43 mit einer geraden Stirnverzahnung und der Zwischenwelle 30, wobei das Zahnrad 43 mit einem an der Kurbelwelle 14 festgelegten Zahnrad kämmt und das Übersetzungsverhältnis zwischen dieser Zahnradpaarung 1:1 betragen kann.

Das Zahnrad 43 wird über eine Wellenmutter 44 und eine zwischen dem Zahnrad 43 und der Wellenmutter 44 angeordnete Scheibe 45 an der Zwischenwelle 30 festgelegt.

An der Zwischenwelle 30 befinden sich zwei Steuerkettenritzel 46, 47 über Scheibenfedem, von denen eine Scheibenfeder 48 dargestellt ist, drehfest angeordnet, so dass über die Steuerkettenritzel 46, 47 nicht dargestellte Steuerketten angetrieben werden können, die bis in den Bereich der Zylinderköpfe 15, 16 der Zylinder 4, 5 des Motors 1 laufen, um dort über Gaswechselsteuerbauteile in der Form von Nockenwellen, Ventilen und dergleichen für einen Gaswechsel zu sorgen. Nach einer alternativen Ausführungsform kann das Steuerkettenritzel 47 auch einstückig mit der Welle 30 ausgebildet sein.

An der in der Zeichnung rechten Hälfte der Welle 30 befindet sich ein Pumpenrad 49 an der Zwischenwelle 30 axialfest und drehfest angeordnet, mit dem die Kühlflüssigkeit eines flüssigkeitsgekühlten V2-Motors 1 im Kreislauf durch einen Wärmetauscher umgepumpt werden kann.

Die Zwischenwelle 30 weist zur Entlüftung des Kurbelgehäuses 12 des V2-Motors 1 eine Längsbohrung 50 auf, die sich über weitgehend die gesamte axiale Länge der Zwischenwelle 30 erstreckt und an dem, dem Pumpenrad 49 axial gegenüber liegenden Ende der Zwischenwelle 30 mit einer durchgehenden Querbohrung 51 in Fluidverbindung steht. Aufgrund der Zentrifugalwirkung der sich drehenden Zwischenwelle 30 wird im Kurbelgehäuse 12 des Motors 1 befindliches Öl, welches aufgrund des Druckunterschieds im Kurbelgehäuse 12 und der Umgebung oder dem Luftfilterkasten des Motorrads mit den über die Längsbohrung 50 zu entspannenden Gasen durch die Längsbohrung 50 transportiert wird, über die Querbohrung 51 abgeschieden, so daß über die Austrittsöffnung 52 und einem daran eventuell angeordneten Stutzen nur mehr die zu entspannenden Gase in den Luftfilterkasten entspannt werden.

Über die Zwischenwelle 30 wird das vom elektrischen Startermotor 19 stammende Abtriebsmoment mittels des an ihr gelagerten Zahnrads 31 beim Startvorgang auf die Kurbelwelle 14 übertragen und darüber hinaus sorgt die Zwischenwelle 30 über die Ausgleichsgewichte 39, 41 für einen Ausgleich der freien Massenkräfte und Momente erster Ordnung. Zudem dient sie über die Steuerkettenritzel 46, 47 als Antrieb für die Gaswechselsteuerbauteile in den Zylinderköpfen des Motors 1 und integriert auch wesentliche Elemente der Entlüftung des Kurbelgehäuses des Motors. Im Vergleich zu bekannten V2-Motoren fällt daher eine nur die Ausgleichsfunktion der ersten freien Massenkräfte übernehmende Ausgleichswelle vollständig weg. Aufgrund der Anordnung des Pumpenrads 49 an der Zwischenwelle 30 kann auch eine eigenständige Pumpenradwelle entfallen. Hierdurch werden Lagerstellen eingespart, was zu einer Verringerung des Reibmoments des Motors führt und damit auch zu einer Verbrauchsreduktion. Aufgrund der Integration der Startvorrichtung 2 in den V-förmigen Zwischenraum 3 des V2-Motors wird ein ausgesprochen kompakter Motoraufbau erreicht, der zu einer Verkleinerung der Anbindungsfläche zwischen dem Motor 1 und dem Rahmen des Motorrads führt.

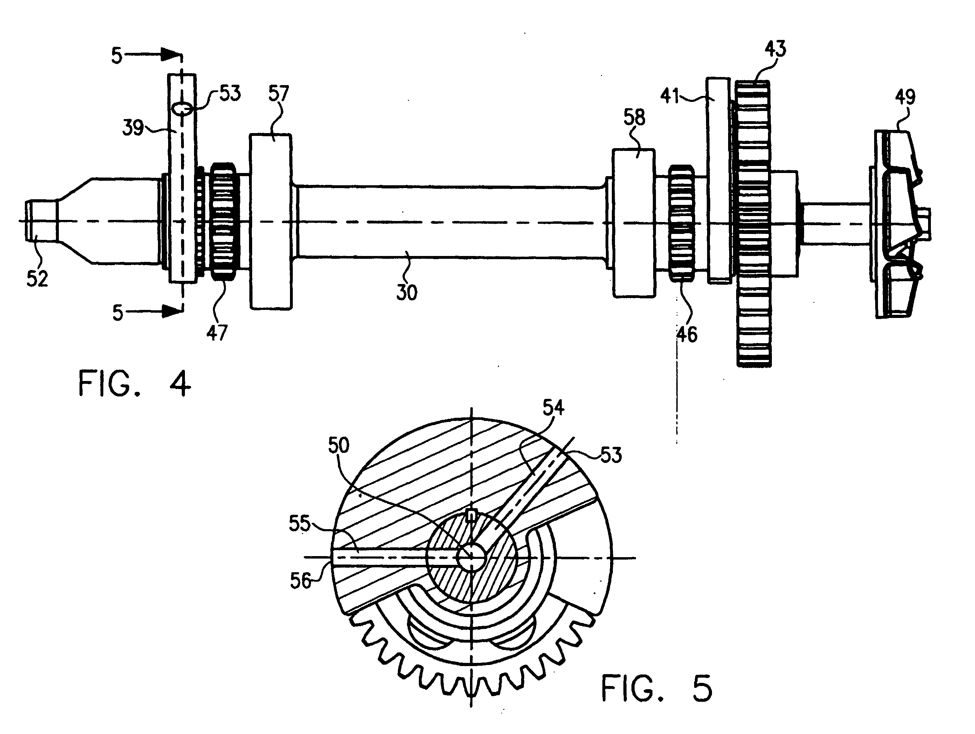

Fig. 4 der Zeichnung zeigt eine Darstellung einer Zwischenwelle 30 nach einer modifizierten Ausführungsform. Die in Fig. 4 der Zeichnung dargestellte Zwischenwelle 30 entspricht weitgehend der in Fig. 3 der Zeichnung dargestellten Zwischenwelle 30, wobei die hauptsächlichen Unterschiede im Bereich der Entlüftung des Kurbelgehäuses und der Ölabscheidung liegen.

Wie es ohne weiteres ersichtlich ist, weist die Zwischenwelle 30 nach Fig. 4 der Zeichnung im Bereich des in der Zeichnungsebene linksseitigen Massekörpers 39 eine Bohrung 53 auf, deren Lage sich näher noch anhand von Fig. 5 der Zeichnung erschließt.

Die Bohrung 53 ist die Austrittsöffnung eines im Massekörper 39 ausgebildeten Kanals 54, der die Bohrung 53 mit der mittigen Längsbohrung 50 der Zwischenwelle 30 verbindet. Neben diesem Kanal 54 weist der Massekörper 39 einen weiteren Kanal 55 mit einer entsprechenden Austrittsöffnung 56 auf, die in Fig. 4 der Zeichnung in der Zeichnungsebene hinten liegt.

Die Kanäle 54, 55 dienen der Abscheidung von Motoröl aus der Kurbelgehäuseentl,üftung, wobei auf Grund des größeren Radius, auf dem die Bohrungen 53, 56 liegen, verglichen mit dem Radius der Austrittsöffnungen der Querbohrung 51 der Zwischenwelle 30 nach Fig. 3 der Zeichnung bei gleicher Drehzahl der jeweiligen Wellen 30 eine noch effektivere Abscheidung von Motoröl erreicht wird. Das Pumpenrad 49 kann an Stelle der in Fig. 3 der Zeichnung dargestellten Festlegung auf einem mit einem Außengewinde versehenen Wellenende auch mittels eines Schaubbolzens am Wellenende festgelegt werden mit einer Wellen-Nabenverbindung zwischen dem Pumpenrad 49 und dem Wellenende in der Form beispielsweise eines Vierkantprofils. Fig. 4 der Zeichnung zeigt darüber hinaus auch noch zwei Wälzlager 57, 58 in der Form von Kugellagern, mit denen die Zwischenwelle im Kurbelgehäuse 12 des V2-Motors gelagert werden kann.

Die Startvorrichtung 2 und insbesondere der elektrische Startermotor 19 sind geschützt gegen vom Vorderrad des Motorrads aufgewirbelte Steine, was insbesondere bei Geländesportmotorrädern von erheblicher Bedeutung ist.

Hinsichtlich vorstehend im einzelnen nicht näher erläuterter Merkmale der Erfindung wird im übrigen ausdrücklich auf die Ansprüche und die Zeichnung verwiesen.

## Patentansprüche

1. Startvorrichtung (2) für einen Zweirylinderverbrennungsmotor (1) mit Zylindern (4, 5) in V-Anordnung mit einem elektrischen Startermotor (19) und einem damit gekoppelten Zahnradgetriebe (20) zur Übertragung eines Abtriebsmoments des Startermotors (19) auf eine Kurbelwelle (14) des Motors (1) sowie einer zwischen dem Getriebe (20) und der Kurbelwelle (14) angeordneten Freilaufkupplung (21), wobei der Startermotor (19) und das Getriebe (20) im V-förmigen Zwischenraum (3) zwischen den Zylindern (4, 5) oberhalb der Kurbelwelle (14) angeordnet sind, **dadurch gekennzeichnet, dass** das Getriebe (20) eine oberhalb der Kurbelwelle (14) angeordnete Zwischenwelle (30) zur Übertragung des Abtriebsmoments des Startermotors (19) mittels eines auf der Zwischenwelle (30) drehbar gelagerten Zahnrads (31) auf die Kurbelwelle (14) besitzt und die Zwischenwelle (30) auch zum Massenausgleich erster Ordnung und Momentenausgleich erster Ordnung ausgebildet ist.

2. Startvorrichtung nach Anspruch 1, **dadurch gekennzeichnet, dass** an der Zwischenwelle (30) zum Massenausgleich und Momentenausgleich erster Ordnung ein wangenförmiger Massekörper (39, 41) axialfest und drehfest an jeweils einem axialen Endbereich der Zwischenwelle (30) festgelegt ist.

3. Startvorrichtung nach Anspruch 1 oder 2, **dadurch gekennzeichnet, dass** die Zwischenwelle (30) mindestens ein Ritzel (46, 47) zum Antrieb einer Steuerkette zur Betätigung von Gaswechselsteuerbauteilen des Verbrennungsmotors (1) aufweist.

4. Startvorrichtung nach einem der Ansprüche 1 bis 3, **dadurch gekennzeichnet, dass** an der Zwischenwelle (30) an einem axialen Ende ein Pumpenrad (49) zum Fördern einer Kühlflüssigkeit des Verbrennungsmotors (1) axialfest und drehfest festgelegt ist.

5. Startvorrichtung nach einem der Ansprüche 1 bis 4, **dadurch gekennzeichnet, dass** die Zwischenwelle (30) zur Entlüftung des Kurbelgehäuses (14) des Verbrennungsmotors (1) eine sich über weitgehend die gesamte axiale Länge erstreckende Längsbohrung (50) aufweist, quer zu der an einem axialen Ende der Zwischenwelle (30) eine durchgehende Querbohrung (51) zur Zentrifugalabscheidung von Schmieröl des Verbrennungsmotors (1) verläuft.

6. Startvorrichtung nach einem der Ansprüche 1 bis 4, **dadurch gekennzeichnet, dass** die Zwischenwelle (30) zur Entlüftung des Kurbelgehäuses (14) des Verbrennungsmotors (1) eine sich über weitgehend die gesamte axiale Länge erstreckende Längsbohrung (50) aufweist, quer zu der in einem wangenförmigen Massekörper (39) mindestens eine Querbohrung (54, 55) zur Zentrifugalabscheidung von Schmieröl des Verbrennungsmotors (1) verläuft.

7. Startvorrichtung nach einem der Ansprüche 1 bis 6, **dadurch gekennzeichnet, dass** der Startermotor (19) über eine mit zwei im axialen Abstand zueinander angeordneten Zahnrädern (24, 27) versehene Getriebewelle (25) und eine weitere mit einer Verzahnung versehene Getriebewelle (28) mit einem auf der Zwischenwelle (30) drehbar gelagerten Zahnrad (31) zur Momentenübertragung gekoppelt ist

8. Startvorrichtung nach Anspruch 7, **dadurch gekennzeichnet, dass** die Achsmitten der beiden Getriebewellen (25, 28) zu der Achsmitte der Abtriebswelle (23) des Startermotors (19) und der Achsmitte des Zwischenwelle (30) in Richtung zum hinteren Zylinder (5) versetzt sind.

9. Startvorrichtung nach einem der Ansprüche 1 bis 8, **dadurch gekennzeichnet, dass** die Freilaufkupplung (21) die kraftschlüssige Verbindung zwischen dem Startermotor (19) und der Kurbelwelle (14) nach dem Erreichen einer vorbestimmten Drehzahldifferenz öffnet.

10. Zweizylinderverbrennungsmotor mit einer Startvorrichtung nach einem der vorstehenden Ansprüche.

## Claims

1. Starting apparatus (2) for a twin-cylinder internal combustion engine (1) with cylinders (4, 5) in a V-arrangement, comprising an electric starter motor (19) and a gear unit (20) coupled thereto for transmitting an output torque of the starter motor (19) to a crankshaft (14) of the engine (1) as well as a free-wheel clutch (21) disposed between the gear unit (20) and the crankshaft (14), wherein the starter motor (19) and the gear unit (20) are disposed above the crankshaft (14) in the V-shaped space (3) between the cylinders (4, 5), **characterized in that** the gear unit (20) has an intermediate shaft (30) disposed above the crankshaft (14) for transmitting the output torque of the starter motor (19) by means of a gear wheel (31), which is mounted rotatably on the intermediate shaft (30), to the crankshaft (14) and the intermediate shaft (30) is designed also for first-order mass balance and first-order moment balance.

2. Starting apparatus according to claim 1, **characterized in that** on the intermediate shaft (30) for first-order mass and moment balance a cheek-shaped mass body (39, 41) is fastened in an axially and rotationally locked manner in each case to an axial end region of the intermediate shaft (30).

3. Starting apparatus according to claim 1 or 2, **characterized in that** the intermediate shaft (30) comprises at least one pinion (46, 47) for driving a timing chain for the actuation of charge exchange timing components of the internal combustion engine (1).

4. Starting apparatus according to one of claims 1 to 3, **characterized in that** a pump wheel (49) for feeding a cooling liquid of the internal combustion engine (1) is fastened in an axially and rotationally locked manner to an axial end of the intermediate shaft (30).

5. Starting apparatus according to one of claims 1 to 4, **characterized in that** for breathing of the crankcase (14) of the internal combustion engine (1) the intermediate shaft (30) has a longitudinal bore (50), which extends over substantially the entire axial length and extending at right angles to which at one axial end of the intermediate shaft (30) is a continuous transverse bore (51) for the centrifugal separation of lubricating oil of the internal combustion engine (1).

6. Starting apparatus according to one of claims 1 to 4, **characterized in that** for breathing of the crankcase (14) of the internal combustion engine (1) the intermediate shaft (30) has a longitudinal bore (50), which extends over substantially the entire axial length and extending at right angles to which in a cheek-shaped mass body (39) is at least one transverse bore (54, 55) for the centrifugal separation of lubricating oil of the internal combustion engine (1).

7. Starting apparatus according to one of claims 1 to 6, **characterized in that** for torque transmission the starter motor (19) is coupled by a transmission shaft (25), which is provided with two gear wheels (24, 27) disposed at an axial distance from one another, and by a further transmission shaft (28) provided with gearing to a gear wheel (31) mounted rotatably on the intermediate shaft (30).

8. Starting apparatus according to claim 7, **characterized in that** the centre lines of the two transmission shafts (25, 28) are offset in the direction of the rear cylinder (5) relative to the centre line of the output shaft (23) of the starter motor (19) and to the centre line of the intermediate shaft (30).

9. Starting apparatus according to one of claims 1 to 8, **characterized in that** the free-wheel clutch (21) opens the frictional connection between the starter motor (19) and the crankshaft (14) after attainment of a predetermined rotational speed difference.

10. Twin-cylinder internal combustion engine with a starting apparatus according to one of the preceding claims.

## Revendications

1. Dispositif de démarrage (2) pour un moteur à combustion interne à deux cylindres (1), comportant des cylindres (4, 5) selon un agencement en V, avec un démarreur (19) électrique et une transmission par engrenages (20) couplée à celui-ci pour transmettre un moment de réduction du démarreur (19) à un vilebrequin (14) du moteur (1), ainsi qu'un couplage à roue libre (21) disposé entre la transmission (20) et le vilebrequin (14), moyennant quoi le démarreur (19) et la transmission (20) sont disposés dans l'espace intermédiaire (3) en forme de V entre les cylindres (4, 5) au-dessus du vilebrequin (14), **caractérisé en ce que** la transmission (20) possède un arbre intermédiaire (30) disposé au-dessus du vilebrequin (14), permettant de transmettre le moment de réduction du démarreur (19) au vilebrequin (14) grâce à une roue dentée (31) disposée de manière à tourner sur l'arbre intermédiaire (30), et l'arbre intermédiaire (30) est également configuré pour permettre un équilibrage de masses du premier ordre et un équilibrage de moments du premier ordre.

2. Dispositif de démarrage selon la revendication 1, **caractérisé en ce que**, au niveau de l'arbre intermédiaire (30) permettant l'équilibrage de masses et l'équilibrage de moments du premier ordre, un corps de masse (39, 41) en forme de flasque est fixé, en étant immobile axialement et en résistant à la rotation, respectivement à une zone d'extrémité axiale de l'arbre intermédiaire (30).

3. Dispositif de démarrage selon l'une quelconque des revendications 1 ou 2, **caractérisé en ce que** l'arbre intermédiaire (30) présente au moins un pignon (46, 47) pour entraîner une chaîne de distribution permettant d'actionner les composants régulant les échanges gazeux du moteur à combustion interne (1).

4. Dispositif de démarrage selon l'une quelconque des revendications 1 à 3, **caractérisé en ce que**, au niveau de l'arbre intermédiaire (30), à l'extrémité axiale, un rotor menant (49) est fixé en étant immobile axialement et en résistant à la rotation pour transporter un liquide de refroidissement du moteur à combustion interne (1).

5. Dispositif de démarrage selon l'une quelconque des revendications 1 à 4, **caractérisé en ce que** l'arbre intermédiaire (30) permettant de purger le carter de vilebrequin (14) du moteur à combustion interne (1) présente un alésage longitudinal (50) s'étendant quasiment sur toute la longueur axiale, tansversalement par rapport auquel se trouve, à l'extrémité axiale de l'arbre intermédiaire (30), un alésage transversal continu (51) permettant une séparation centrifuge de l'huile lubrifiante du moteur à combustion interne (1).

6. Dispositif de démarrage selon l'une quelconque des revendications 1 à 4, **caractérisé en ce que** l'arbre intermédiaire (30) permettant de purger le carter de vilebrequin (14) du moteur à combustion interne (1) présente un alésage longitudinal (50) s'étendant quasiment sur toute la longueur axiale, transversalement par rapport auquel se trouve, dans un corps de masse (39) en forme de flasque, au moins un alésage transversal (54, 55) permettant la séparation centrifuge de l'huile lubrifiante du moteur à combustion interne (1).

7. Dispositif de démarrage selon l'une quelconque des revendications 1 à 6, **caractérisé en ce que** le démarreur (19) est couplé, pour la transmission des moments, à une roue dentée (31) disposée de manière à pouvoir tourner sur l'arbre intermédiaire (30) par l'intermédiaire d'un arbre de transmission (25) doté de deux roues dentées (24, 27) disposées à une certaine distance axiale l'une de l'autre, et d'un autre arbre de transmission (28) doté d'une denture.

8. Dispositif de démarrage selon la revendication 7, **caractérisé en ce que** les milieux des axes des deux arbres de transmission (25, 28) sont décalés par rapport au milieu de l'axe de l'arbre mené (23) du démarreur (19) et au milieu de l'axe de l'arbre intermédiaire (30) en direction du cylindre arrière (5).

9. Dispositif de démarrage selon l'une quelconque des revendications 1 à 8, **caractérisé en ce que** le couplage à roue libre (21) annule la liaison par friction entre le démarreur (19) et le vilebrequin (14) une fois qu'on a atteint une différence de nombre de tours prédéterminée.

10. Moteur de combustion à deux cylindres avec un dispositif de démarrage selon l'une quelconque des revendications précédentes.
